# EUROPEAN PATENT APPLICATION

(11) **EP 4 779 281 A1**
(43) Date of publication of application: **22.07.2026**
(21) Application number: 25152781.8
(22) Date of filing: 20.01.2025
(51) Int. Cl.: G01L 1/24, G01M 5/00, G01M 7/02, G01M 11/08

(54) **A NON-DESTRUCTIVE METHOD FOR INDIRECT MEASUREMENT OF AXIAL FORCES USED AS A WARNING SYSTEM FOR BUCKLING OF DISPLACEMENT-CONSTRAINED STRUCTURAL ELEMENTS**

(71) Applicant: Eth Zurich Institute Of Geotechnical Engineering, 8092 Zürich (CH)
(72) Inventor: Puzrin, Alexander, 8006 Zürich (CH); Hauswirth, Dominik Reto, 5000 Aarau (CH); Stöcklin, Andreas Wadim, 8049 Zürich (CH); Morf, Urias Dominique, 8046 Zürich (CH)
(74) Representative: De Tullio, Michele Elio

(57) **Abstract**

The present invention provides a system and method for accurately estimating axial force within structural elements-such as beams, columns, and beam-like plate elements found in buildings, tunnels, bridges, and excavation supports-and assessing the elements' proximity to critical buckling load. This invention leverages the inherent dependency between axial force and natural vibration frequency, employing advanced fibre optic sensing technology to facilitate real-time, remote monitoring of numerous structural elements simultaneously. Further, the invention allows for the identification and monitoring of temperature-independent actions, such as external loads or forced displacements.

## Description

### TECHNICAL FIELD

The present invention pertains to a system and method for monitoring and analyzing structural elements, particularly those susceptible to buckling under axial loads. More specifically, it relates to a system and method for estimating the axial force and monitoring its proximity to the buckling load in structural elements, including beams, columns, and beam-like plate elements in buildings, tunnels, bridges, and excavation supports. The present invention specifically employs advanced fibre optic sensing technologies to detect and measure temperature, vibrations, and potentially strain, enabling the practical implementation of a vibration-based axial force monitoring system.

### BACKGROUND

The monitoring of compressive axial forces is a critical challenge for structures of compromised or unassessed integrity, as they can jeopardize the stability of components susceptible to buckling. This issue is particularly relevant for slender elements such as columns, beams, and stiffeners, potentially leading to catastrophic failure if not adequately addressed in the design and analysis phases. Furthermore, buckling can manifest even under seemingly minor loads for structures subject to external displacements or disturbances, such as those encountered in braced excavations, pipelines, and trusses, highlighting the critical importance of monitoring axial forces to prevent sudden failures.

Determining an unknown axial force in a structural component plays a crucial role in structural health monitoring and engineering diagnostics. This task is typically approached by direct, indirect, or qualitative methods.

Direct measurement methods often use pre-installed strain gauges or integrated load cells to measure axial force. However, such techniques require some physical modification of the structure, which may not always be feasible or desirable, especially in existing jeopardized structures.

Indirect methods estimate axial force by measuring displacements, vibrations or strains and applying inverse analysis to deduce the axial force from the measured data. The accuracy of these methods depends on the reliability of the applied models and assumptions.

Qualitative methods do not quantify the acting force but rely on other indicators like visual inspections, observations, or behavioural assessments. These methods can give a rough estimate of the structural conditions but are less precise and often depend on human interpretation.

Indirect methods based on strain measurements often fall short for precise axial force monitoring, as they are sensitive to temperature-induced strains from thermal elongation. Furthermore, since strain measurements are relative to the moment of sensor installation, installing sensors on a compromised element after the fact does not yield the absolute axial force acting on it.

Vibration based indirect methods provide the most viable option for the non-destructive measurement of axial forces in existing structures, relying on the well-known relationship between axial force and natural frequencies, as demonstrated in analytical studies of various structural elements (Massonet 1940; Abramovich, 1992; Bokaian, 1988, *"Natural frequencies of beams under compressive axial loads,"*) and in practical application using accelerometer sensors (Garziera et al., 2011).

Vibration based methods have proved particularly useful for the measurement of tensile axial forces. Various patents have been filed in this respect, for example, CN117949131A (KONG et al., 2024), where modal analysis of an inhaul cable using vibration data captured through video has been disclosed, or CN105784211A (LONG et al., 2016), CN105043631A (LI DAJUN et al., 2015), CN111928890A (LIU et al., 2020), where methods for estimating cable force based on acceleration and vibration measurements are described.

Applications to compressed structural elements, on the other hand, encounter challenges in practical scenarios due to uncertainties in boundary conditions and temperature fluctuations and are therefore mostly confined to controlled laboratory settings (see for example, Carpinteri et al., "Fundamental frequency evolution in slender beams subjected to imposed axial displacements", Journal of Sound and Vibration 333 (2014) 2390-2403, 2014). Existing methods are typically only applicable to very specific structural systems, like, for example, US9689760B2 (LANZA DI SCALEA, 2011), which discloses a method for stress detection in rail systems using strain gauges and localized temperature sensors.

Further, methods that rely on point sensors, such as strain gauges or accelerometers, are not well suited for extensive structures with a multiplicity of jeopardized elements. In this case, setting up enough sensors to cover all critical points becomes a complex and inefficient process, as each sensor requires individual installation, calibration, and data collection, making the system costly and difficult to manage in large-scale applications.

Distributed fibre optic sensing can be used to overcome the above technical problems, as it provides a suitable measurement technique for the efficient coverage of a series of structural elements requiring solely a fibre optic cable attached to the monitored structural elements and connection to an interrogator unit at one of its ends. In recent years, various fibre optic technologies have been developed, like for example, Distributed Temperature Sensing (DTS), Distributed Strain Sensing (DSS) and Distributed Vibration Sensing (DVS), which provide high sensitivity to many physical quantities. They allow the continuous, real-time monitoring of structures with high temporal and spatial resolution over long distances using a single silica fibre.

The integration of multiple fibre optic sensing technologies is a well-established practice. Various methods have been proposed for the combination of DSS with DTS technology for the separation of strain and temperature, as for example in EP3218747B1 (REAVES et al., 2014) and EP3314202B1 (BEDNARSKI and SIENKO, 2016). A combination of DTS, DSS with Distributed Acoustic Sensing (DAS) technique can be found in CN116519049A (SON et al., 2023) disclosing a monitoring system for measuring stress changes, temperatures, and vibration speed in tunnels. Similarly, CN111536892A (YU et al., 2020) proposes a monitoring system for underground pipelines. However, neither application utilizes the indirect vibration-based measurement principle of axial force, relying on strain-based methods for the measurement of changes in axial force with respect to the time of attachment.

Further applications in structural health monitoring have been proposed based on Fibre Bragg Grating technology (FBG). For example, CN106441658A (ZHU et al., 2016) discloses a FBG measuring system for rod stress measurement and CN108680291B (REN, 2018), describes a cable force monitoring device. However, unlike the localized and limited number of FBG measurements, distributed sensing technologies measure events and vibrations across distributed sections along the entire fibre, thereby providing the only viable option for the comprehensive assessment of integrity for extensive structures with a multiplicity of monitored elements.

In summary, monitoring externally constrained structures and their vulnerable components is crucial for ensuring the safety and reliability of critical infrastructure. Although various established methods exist for the non-destructive measurement of axial forces in beam-like structures, critical challenges remain regarding compressive axial forces, unknown boundary conditions, fluctuations in temperature and scalability for large structures. Fibre optic sensing technologies offer suitable measurement capabilities for a variety of physical quantities with dense spatial coverage and have been applied in various structural monitoring systems.

There is therefore the need for an axial force monitoring system for the uncontrolled and often unknown environments in structural engineering practice. The present invention outlines a system and a method based on distributed fibre optic vibration sensors and, optionally, a method based on the combination with fibre optic temperature and strain sensors for the non-destructive monitoring of the compressive axial force utilizing principles from vibrational analysis.

### SUMMARY OF THE INVENTION

The present invention provides a system and method for accurately estimating axial force within structural elements-such as beams, columns, and beam-like plate elements found in buildings, tunnels, bridges, and excavation supports-and assessing the elements' proximity to critical buckling load. This invention leverages the inherent dependency between axial force and natural vibration frequency, employing advanced fibre optic sensing technology to facilitate real-time, remote monitoring of numerous structural elements simultaneously. Further, the invention allows for the identification and monitoring of temperature-independent actions, such as external loads or forced displacements.

According to one embodiment of the invention, the disclosed system comprises the following components:
a. at least one fibre optic cable installed along the structural elements in alignment with the direction of the axial force, the cables being attached to exhibit the same displacements and temperature as the monitored structural element and each cable comprising at least one silica fibre;
b. a fibre optic interrogator unit or set of fibre optic interrogator units capable of measuring a physical quantity or multiple physical quantities along the connected silica fibres, comprising vibrations and optionally temperatures, providing multiple measurements of each physical quantity along each monitored element (vibration measurements herein describe rapid, small-scale changes in the length of specific cable sections);
c. a control unit connected to the interrogator units and configured to implement for each structural element a specialized algorithm that processes the acquired data and estimates the acting axial force based on principles from vibrational analysis, optionally also estimating the temperature distribution and analysing the evolution of the estimated axial force and temperature distribution identifying temperature-independent actions.

Each fibre optic interrogator is connected to a dedicated silica fibre of suitable type, which may be hosted by multiple cables or by a single fibre optic cable containing multiple fibres. The cables are attached to undergo displacement along with any motion of the monitored structure, thereby enabling vibration measurements representative of the monitored elements vibrational behaviour. This is accomplished through the use of appropriate tight-buffered cables and durable adhesives.

According to an embodiment of the present invention, each of the silica fibres may form a loop and have both ends connected to the respective interrogator unit.

The control units as well as the fibre optic interrogator units operate remotely from a location outside the structure's perimeter, with only the fibre optic cables directly attached to the structural elements, thereby facilitating the regular usage of the monitored structure.

According to a specific embodiment, the disclosed system comprises an additional interrogator unit capable of measuring strains in the sections corresponding to the monitored elements, and the control unit is configured to implement an additional validation step based on the strain measurements.

The control unit is configured to compute the vibrational behaviour of the monitored structure, expressed as strain mode shapes and corresponding natural frequencies, based on a user-defined structural model incorporating a set of specific, previously undefined parameters. These parameters may encompass boundary restraints such as the stiffness of rotational restraints or the bending stiffness of the structural element, both of which may exhibit dependence on the acting axial force in complex structural configurations. The configured algorithm encompasses an optimization step of the model's parameters matching its predicted strain mode shapes with the measurement-based estimations. In a further step, the algorithm computes the relationship between the acting axial force and the natural frequency using the optimized structural model also yielding the critical buckling load. Using the previously determined natural frequencies, the control unit is configured to estimate the acting axial force and its proximity to the buckling load.

According to another aspect of the present invention, it specifically relates to a non-destructive method for monitoring the acting axial force in the primary load-bearing axis of at least one structural element comprising the following steps:
1. attaching one or more fibre optic cables covering at least in part said at least one structural element, wherein the cables are aligned with the direction of the acting axial force and routing the ends of said cables to a remote location accommodating the placement of interrogator units and the control unit;
2. conducing measurements of a physical quantity or a plurality of physical quantities using fibre optic interrogator units during the regular operation of the structure, wherein the interrogator units capture structural responses to ambient conditions, or alternatively, under controlled excitation to ensure consistency across multiple structural elements and measurement periods;
3. utilizing a specialized algorithm to process the measurements, enabling the identification of the natural frequencies, vibrational mode shapes, and, optionally, an approximate temperature distribution for each monitored structural element;
4. utilizing a specialized algorithm to optimize the parameters of the structural model by aligning its predicted structural vibrational behaviour with the estimated vibrational mode shapes and natural frequencies, thereby determining the acting axial force, and optionally estimating the corresponding temperature distribution.

According to alternative embodiments of the disclosed method, said cables may be embedded within the structural element during construction or affixed externally on the surface post-construction.

According to an embodiment of the present method, said at least one structural element comprises a plurality of beams, columns, struts, or beam-like plate elements within the structural system of buildings, tunnels, bridges, or excavations.

According to another embodiment of the disclosed method, said at least one structural element comprises a plurality of tunnel ceiling elements, wherein the at least one fibre optic cable is installed within the tunnel's ventilation system. The fibre optic cable is arranged along the tunnel ceiling axis in a serpentine pattern, with parallel sections spanning the individual ceiling elements.

The control unit may output the results from a single successful optimization, including the estimated acting axial force, and may further estimate and compare this value to the critical buckling load based on the structural model. However, the significance of a single optimization result for assessing the buckling risk is limited, as the structures behaviour under varying environmental influences, in particular temperature, remains undefined. For example, a force-dependent bending stiffness or boundary restraint typically significantly increases the buckling load. In such a case, the vibrational behaviour from a single state does not allow for the accurate evaluation of the proximity to the buckling load.

Therefore, measurement time-histories may further be subdivided into periods of comparable conditions, as potentially estimated from the distributed temperature measurements. The estimated structural parameters over these periods are then analysed for correlation with the estimated axial force, and potentially the estimated temperature distribution. The identification of said axial force or temperature dependency forms a critical step for the reliable estimation of the axial force in field conditions using vibration-based methods, as it allows for the identification and consideration of changes in structural behaviour. Further, the knowledge of the temperature variations allow for an earlier recognition of critical developments regarding the buckling risk as the temperature influence can be quantified and a warning is issued in the event of significant external influences.

Further, it provides an improved model for the assessment of the buckling risk as the axial force dependency of the boundary restraints or bending stiffness have a decisive influence on the buckling force.

The optionally approximated temperature distribution is modeled in a simplified form, depending on the complexity of the expected temperature distribution of the structural elements. This distribution may range from a uniform average temperature to a more detailed longitudinal temperature distribution along the structural element. Both vibration and temperature data undergo critical assessment and adjustments based on the measurement locations within the cross-section as well as the structural perimeter to ensure accurate representation of the element's state.

Certain structural parameters, at least the acting axial force, are estimated individually for each monitored element, while others are shared across elements. Further, specific initial calibration tests may be conducted for an initial estimation of the fundamental structural properties.

In an alternative embodiment, the control unit generates a diagram illustrating the relationship between natural frequency and axial force, as calculated for a suitable and potentially optimized structural model. It facilitates the manual evaluation of the processed measurements for a specific element and time period, while also enabling a critical evaluation of the accuracy of the estimated result. For practical usage, said diagram may further indicate other parameters subject to variation over time, like, for example, the temperature and the rotational end restraints.

For certain applications, an additional interrogator unit capable of measuring strains may be incorporated to concurrently measure each element's strain distribution over time, which directly correlates with changes in temperature and axial force. After deducting the estimated strains from the independent temperature measurement, these additional measurements provide a layer of validation for axial force estimates. However, the distributed strain measurements are relative to the installation state and do not function as an independent monitoring system.

The disclosed invention is ideally suited for the assessment of buckling risks in critical infrastructure and applications that monitor compressive axial forces, comprising:
- in-situ axial force estimation without invasive procedures, allowing the assessment of acting loads during regular operation;
- continuous, real-time monitoring of axial force and buckling risks in displacement-constrained elements in environments with significant temperature variations;
- monitoring a series of access-restricted structural elements with a single system consisting of few components that are located remotely except for a fibre optic cable.

Unlike prior systems, this invention uniquely characterizes the previously undefined structural support conditions and accounts for its variation from loading, for example in the degree of rotational restraint at the boundaries of structural elements. This assessment relies on determining the vibrational strain mode shape from multiple independent vibration measurements along each element. It has significant influence on the relationship between axial force and natural frequency and thereby on the acting axial force estimation.

The optional estimation of the temperature distribution enables the algorithm to differentiate incremental changes in the acting load, attributing them either to restrained thermal expansion or to external loads or forced displacements, allowing for the early detection of critical developments particularly in field applications subject to significant temperature variations.

These and other objectives are fully achieved by virtue of the system and the method for estimating the axial force and its proximity to the buckling load in structural elements having the characteristics defined in independent claim 1 and in independent claim 10.

Preferred embodiments of the invention are specified in the dependent claims, whose subject matter is to be understood as forming an integral or integrating part of the present description.

Further characteristics and advantages of the present invention will become apparent from the following description, provided merely by way of a non-limiting example, with reference to the attached drawings, in which:
- Figure 1 shows a schematic sketch of an axial force monitoring system comprising fibre optic cables applied to a simple structural element according to the invention.
- Figure 2 shows a schematic sketch of the structural model and its critical details as well as indicating specific potential measurement channels for a simple structural element.
- Figures 3A to 3C show schematic sketches of the data processing steps as conducted by the control unit for the estimation of the natural frequency, the vibrational strain mode shape and the representative element temperature. It further highlights the critical influence of the end restraints on the natural frequencies and mode shapes.
- Figure 4 illustrates the manual estimation of the axial force from the estimated natural frequency by means of a diagram as calculated by the control unit.
- Figure 5 illustrates the correlation of the estimated acting axial force to the estimated temperature showing separate trends indicating a temperature-independent increase in axial load.
- Figure 6 illustrates the manual estimation of the axial force for a complex structure with varying rotational end restraints using a diagram calculated by the control unit.
- Figure 7 illustrates the adaptation of the axial force monitoring system to the ventilation ceilings in a tunnel structure.
- Figure 8 shows a schematic sketch of the structural model and its critical details as well as indicating specific potential measurement channels for a monitored tunnel-ceiling element.
- Figure 9 shows the relationship between natural frequency and axial force as well as a representative vibrational mode as obtained from a numerical model.
- Fig. 10 displays the normalized vibrational mode shape as calculated by the control unit (6) for the approximately horizontal components of the monitored tunnel ceiling element depicted in Fig. 7 using the optimized structural model.

### DESCRIPTION OF THE INVENTION

The disclosed non-destructive method and system of the present invention for measuring of axial force and its proximity to the buckling load in structural elements become better understood through review of the following detailed description in conjunction with the figures.

The detailed description and figures provide merely examples of the invention described herein. Those skilled in the art will understand that the disclosed examples may be varied, modified, and altered without departing from the scope of the invention described herein. Many variations are contemplated for different applications and design considerations; however, for the sake of brevity, each and every contemplated variation is not individually described in the following detailed description.

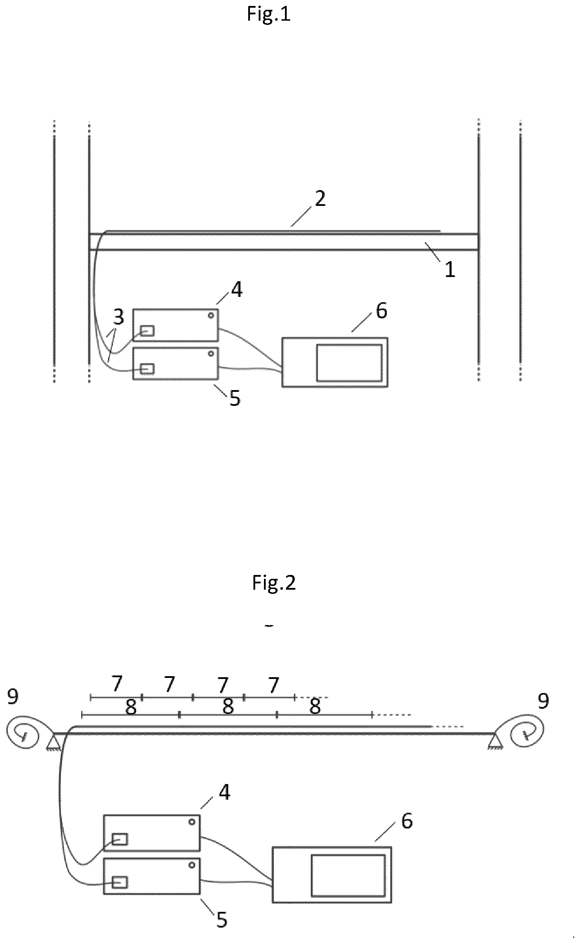

With reference to Fig. 1, a schematic sketch of an axial force monitoring system applied to a simple structural element (1) subject to the action of a previously undefined axial force is represented. The structural element can consist of a single or multiple connected beam-like elements. The system comprises at least one fibre optic cable (2) that is externally attached to the structure and hosts a plurality of silica fibers (3). The fibre optic cable may cover a single or a series of structural elements. The silica fibers (3) are connected to fibre optic interrogator units (4, 5) located away from the structural perimeter. The fibre optic interrogator units are configured to measure vibrations or a combination of vibrations and temperatures distributed along the monitored element. These interrogator units are in connection with a control unit (6) and provide raw measurements for processing and evaluation.

Fig. 2 shows a schematic representation of the structural model for the monitored element (1) showing the plurality of distributed vibration channels (7) and optional temperature channels (8) as measured by the fibre optic interrogator units (4, 5). If the fibre optic cables are configured as a closed loop by connecting their ends, the interrogator units provide an additional set of measurement channels capturing data along the structural perimeter with a longitudinal offset relative to the primary channels. The diagram of Fig.2 also depicts the initially unknown rotational restraints (9), which may be included or excluded on either side of the structured element, depending on its structural complexity. These restraints play a critical role in determining the acting axial force, as their characteristics significantly influence the accuracy of the force estimation.

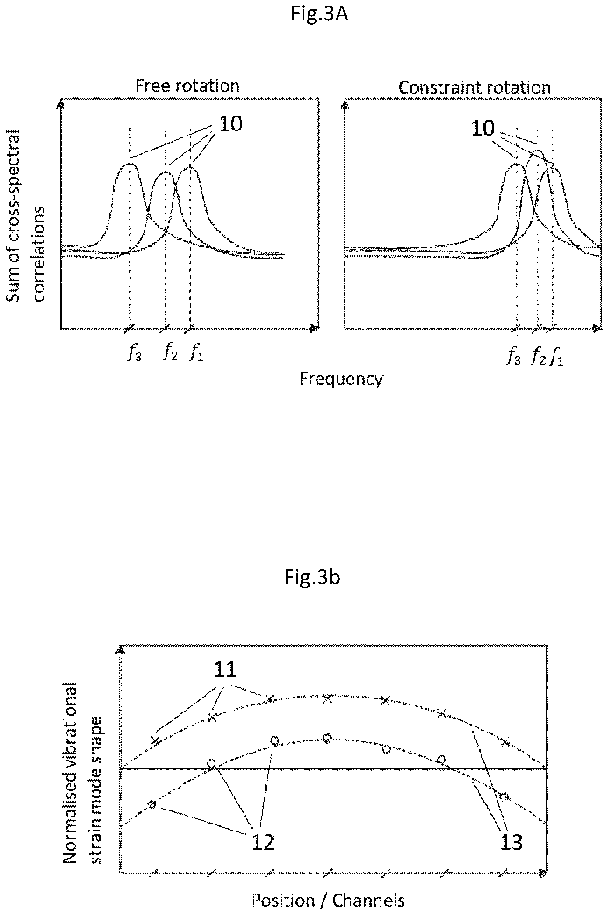

Figs. 3A to 3C illustrate the main processing steps of the raw measurements conducted by the configured control unit (6) and further highlight the influence of the rotational restraints (9) and the magnitude of the acting axial force.

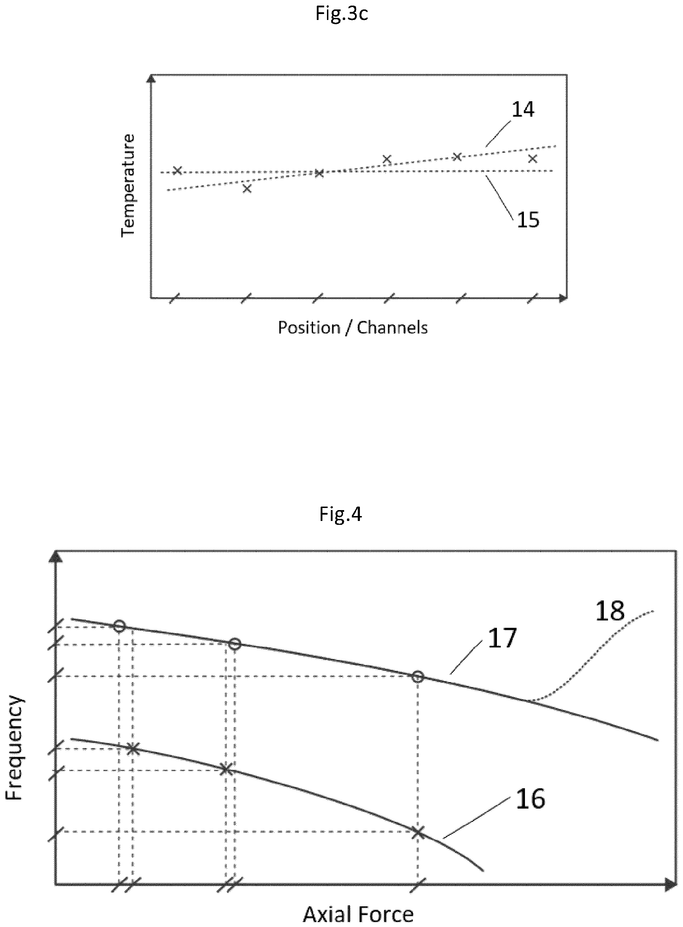

Referring to Fig. 3A, the identification of the natural frequency involves analysing the cross-spectral density, a measure that represents the relationship between vibrations observed at different points on the structural element. This is achieved by summing the cross-spectral densities calculated for all pairs of vibration measurement channels positioned on the element of interest. The natural frequency is then identified as the frequency corresponding to the peaks (10) in this summed cross-spectral density curve. These peaks represent the dominant vibrational modes of the element, where the vibrations across the measurement channels are most strongly correlated, indicating resonance at the natural frequency. As will be immediately evident referring to Fig.4, the natural frequency decreases with an increase in the acting axial force. It is clear that other approaches lead to a comparable estimation of the natural frequencies without deviating from the idea of the invention. Further, it is indicated that the natural frequencies of a structural element with constrained end rotations are generally higher compared to the corresponding freely rotating elements.

With reference to Fig. 3B, exemplary strain mode shapes as obtained from the fibre optic vibration measurements are illustrated. The reference markers (11, 12) indicate the normalized strain mode shapes corresponding to each measurement channel along the monitored element. These markers highlight the differences in structural behaviour between scenarios of free rotation (11) and constrained rotation (12) at the boundaries. The strain mode shapes are computed by the control unit (6) using techniques such as the Frequency Domain Decomposition or other comparable methods. These techniques extract the mode shapes from the vibrational response data. The strain mode shapes represent how strain is distributed along the element during vibration and are influenced by the structural characteristics and boundary conditions. In theory strain mode shapes, represented as a continuous curve (13), depend on the element's physical and geometric properties. These continuous shapes can be derived using analytical calculations or numerical simulations, providing a baseline for comparison with the measured mode shapes. This allows for an assessment of how closely the actual structural behaviour matches the theoretical predictions.

Referring to Fig. 3C, the diagram illustrates how the optional temperature measurements are processed to estimate the temperature distribution of a structural element. In simple cases, a straightforward approach is used to calculate a constant average temperature (15) across the structural element. This average temperature provides a basic representation of the thermal state and is sufficient for elements with relatively uniform temperature conditions. For larger or more complex structures where the temperature varies significantly along the element or around its perimeter, a more advanced method is applied. In such cases, a specific parametrized temperature function (14) is used to estimate the temperature distribution. This function incorporates parameters that account for variations in temperature along the length or across different sections of the structure, providing a more detailed and accurate representation of the thermal conditions. The choice between these methods depends on the complexity of the structure and the precision required for analyzing the effects of temperature on structural behaviour.

Referring to Fig. 4, the diagram represents an exemplary relationship between natural frequency and axial force for a specific structural model highlighting the difference between free rotation (16) and constrained rotation (17). This relationship typically shows that the natural frequency decreases approximately proportionally to the square of the axial force. However, as the axial force approaches the theoretical critical buckling load, the natural frequency theoretically trends toward zero. In practice, this theoretical load is never reached, as initial deformations in the structural element amplify before reaching this point. These deformations lead to non-linear effects that cause the frequency to increase instead of decreasing to zero as indicated by the dotted line (18). In the early stages of deformation, however, these effects are minor, allowing the practical usage of this frequency-axial force relationship for estimating axial force. For a structure characterised by stationary rotational restraints, this output enables manual estimation of the axial force acting on each structural element based on the natural frequency identified through measurements. This approach allows for a straightforward evaluation of axial forces while accounting for the structural model's specific boundary conditions and constraints.

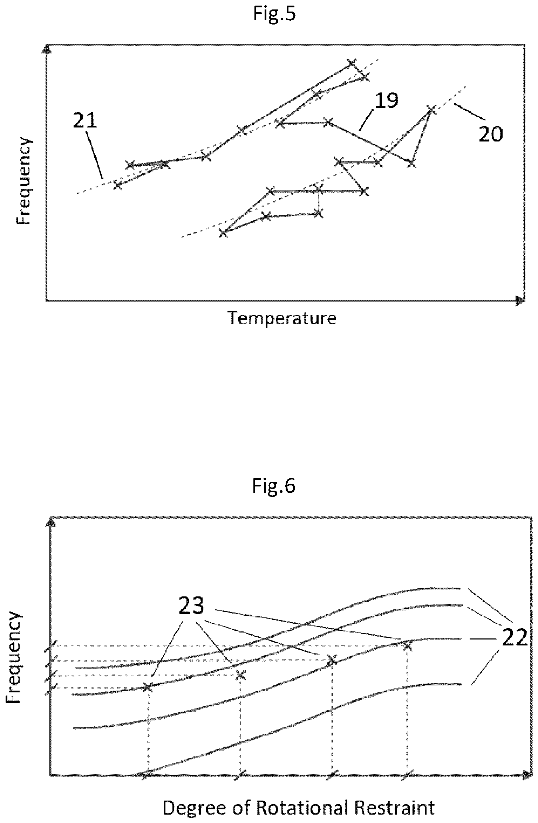

Fig. 5 illustrates the schematic representation of how changes in the axial force are identified in a structure exposed to significant temperature variations within a time-series (19). When thermal expansion is constrained, the acting axial force increases, causing the natural frequency of the structure to change, even in the absence of external loads or forced displacements. In such a case, a trend (20) emerges between the identified natural frequencies and the temperature, which depends on the structure and changes in its characteristics due to axial force variation. External loads or forced displacements are identified as an offset (21) from the original correlation. Contrary to the relationship shown in Fig. 4, the natural frequencies may increase with respect to the acting axial force in cases where the degree of rotational end restraint increases under load.

Referring to Fig. 6, the figure schematically shows the estimation of the acting axial force for a structure subject to varying boundary conditions using a diagram generated by the control unit (6). The diagram depicts the relationship between degree of rotational restraint and natural frequency for a range of acting axial forces (22). Typically, lower curves on the diagram correspond to higher compressive axial forces. For manual monitoring of a structural element, the natural frequency and degree of rotational restraints, as processed by the control unit (6), are represented by reference markers (23) corresponding to specific time periods. The progression of these markers from left to right in the diagram indicates an increase in the acting axial force over time.

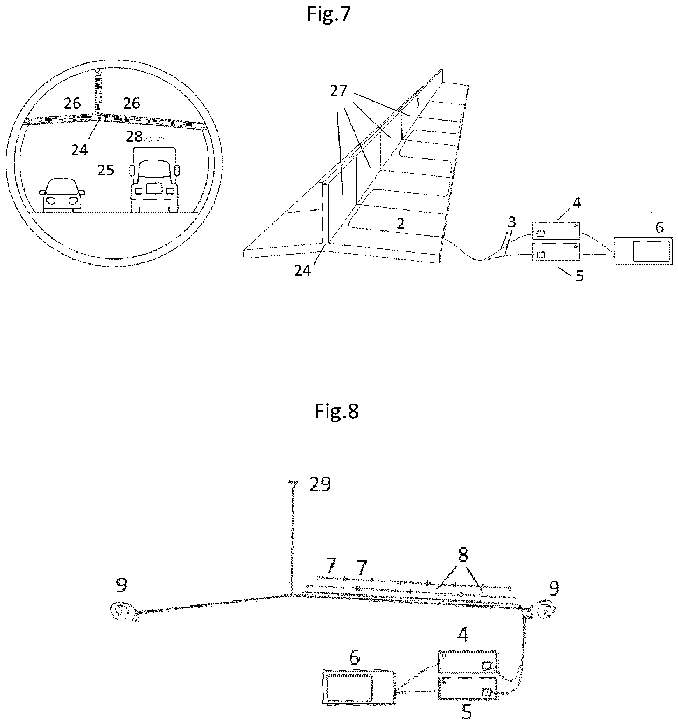

Fig. 7 shows a specific application of the described axial force monitoring system, adapted for use with the structural element of a tunnel ceiling (24) separating the traffic line (25) from the ventilation structure (26). The ventilation structure (26) typically consists of a series of repetitive and comparable structural elements (27) distributed along the length of the tunnel ceiling (27). In this application, the monitoring system is used to measure the horizontal axial force resulting from convergence in the tunnel lining under the pressure impacts (28) of the passing vehicles during regular operation. A fibre optic cable (2) is attached to one side of the tunnel ceilings connecting the individual structural elements (27) in series. The cable is routed to a remote location, where the interrogator units (4, 5) are installed. These units are connected to the silica fibers (3) as well as to the control unit (6), enabling the system to monitor and analyze the axial forces acting on the tunnel ceiling elements effectively.

Referring to Fig. 8, the figure shows a schematic representation of the structural model for the monitored tunnel ceiling element depicted in Fig. 7. The model highlights the distributed vibration channels (7) and optional temperature channels (8) as measured by the fibre optic interrogator units (4, 5). In the presented application, only a portion of the overall structural system is equipped with active instrumentation. The structural model includes a non-parametrized boundary condition (29) at the top, representing a fixed or predefined constraint. Additionally, the model incorporates parametrized rotational restraints (9), which allow for adjustments according to the measured structural characteristics.

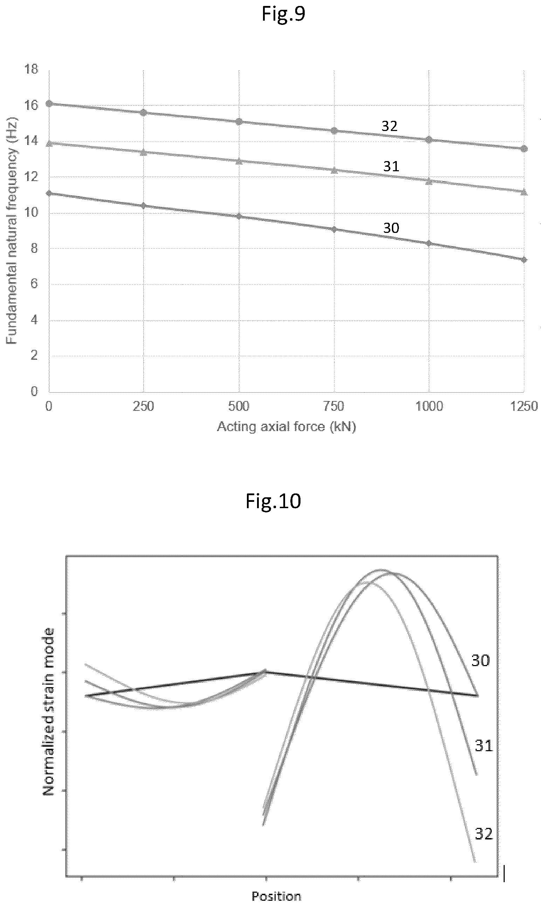

With reference to Fig. 9, the diagram illustrates the relationship between the fundamental natural frequency and the acting axial force as calculated by the control unit (6) for the monitored tunnel ceiling element depicted in Fig. 7. This visualization helps to understand how changes in axial force influence the vibrational behaviour of the monitored structural element depending on the stiffness of the rotational restraint (9), with three curves qualitatively indicating soft (30), intermediate (31) and strong (32) restraint stiffness.
Referring to Fig. 10, the graph displays the normalized vibrational mode shape as calculated by the control unit (6) for the approximately horizontal components of the monitored tunnel ceiling element depicted in Fig. 7 using the optimized structural model. This graph helps to understand how changes in the rotational restraint influence the vibrational behaviour of the monitored structural element depending on the stiffness of the rotational restraint (9), with three curves indicating soft (30), intermediate (31) and strong (32) restraint stiffness. The mode shapes derived from the fibre optic measurements thereby allow for the identification of the previously undefined stiffness of the rotational restraint and facilitate the derivation of the corresponding relationship shown in Fig. 9.

## Claims

1. A non-destructive method for monitoring the structural integrity of at least one structural element by detecting the acting axial force and evaluating the proximity to the buckling load in the primary load-bearing axis of at least one structural element, the method comprising
i. attaching at least one fibre optic cable covering at least in part said at least one structural element along the direction of the primary load-bearing axis and the acting axial force;
ii. measuring at least a physical quantity using at least a specific fibre optic interrogator unit during regular operation of the structure, said at least a physical quantity being an array of strain rates along said at least one fibre optic cable;
iii. utilizing a specialized algorithm configured to process said at least a physical quantity and estimate the vibrational mode shapes, the corresponding natural frequencies of said at least one structural element, enabling the estimation of the acting axial force and its proximity to the buckling load in the primary load-bearing axis of said at least one structural element.

2. The method according to claim 1, wherein said at least a physical quantity additionally comprises an array of temperatures measured by said at least a specific fibre optic interrogator unit and wherein a temperature distribution is used in order to facilitate and complement the estimation of the acting axial force and the proximity to the buckling load in the primary load-bearing axis of said at least one structural element.

3. The method according to claim 1 or 2, wherein said at least one structural element comprises a plurality of beams, columns, struts, or beam-like plate elements integrated within the structural system of buildings, tunnels, bridges, or excavations.

4. The method according to claim 1, 2 or 3, wherein said at least one structural element comprises a plurality of tunnel ceiling elements, and wherein said at least one fibre optic cable is installed within a tunnel ceilings' ventilation system, said at least one fibre optic cable being arranged in a serpentine pattern along the plurality of tunnel ceiling elements axis with parallel sections positioned to span at least in part each element of said plurality of tunnel ceiling elements.

5. The method according to claim 2 to 4, wherein a time-series of the estimated acting axial force is compared to the corresponding estimated temperature distribution, identifying temperature-independent actions by analysing deviations between comparable temperature conditions, and issuing a warning in the event of significant discrepancies.

6. The method according to any of the preceding claims, wherein the step of utilizing a specialized algorithm to process said at least a physical quantity comprises
i. optimizing the parameters of a structural model, taking into account the structural characteristics and the boundary conditions, by calculating and aligning its predicted vibrational strain mode shapes with the estimated strain mode shapes derived from the vibrational response data of said at least one structural element considering the cross-sectional positioning of the fibre optic cables;
ii. determining the relationship between the axial force and the natural frequencies using the optimized structural model for each of said at least one structural element, thereby enabling the estimation of the acting axial force and the proximity to the buckling load.

7. The method according to claim 6, wherein said structural characteristics and boundary conditions of said at least one structural element depend on the acting axial force, and said parameters of the structural model include the stiffness of rotational restraints at the boundaries.

8. The method according to claim 2 to 7, wherein said at least a physical quantity additionally comprises an array of strains measured by said at least a specific interrogator unit along said at least one fibre optic cable, said array of strains serving as a validation of the temporal changes in axial force.

9. The method according to claim 8, wherein said at least a specific interrogator unit measures a distributed quantity sensitive to both strain and temperature, enabling the derivation of the pure strain distribution by subtracting the previously estimated temperature distribution.

10. The method according to claim 8, wherein the fibre optic interrogator units measure the at least a physical quantity under controlled excitations.

11. A system for non-destructive monitoring of the structural integrity of at least one structural element, configured for detecting the acting axial force and the proximity to the buckling load in the primary load-bearing axis of said at least one structural element, the system comprising:
i. at least one fibre optic cable attached at least in part to said at least one structural element aligned in the direction of the acting axial force, said fibre optic cable comprising at least one silica fibre;
ii. at least a specific fibre optic interrogator unit connected to said silica fibres and configured to independently measure at least a physical quantity, said at least a physical quantity comprising an array of strain rates along said at least one fibre optic cable;
iii. a control unit connected to said at least a specific fibre optic interrogator unit and configured to implement for each of the at least one structural element a specialized algorithm configured for
1. processing said at least a physical quantity measure and estimating the vibrational strain mode shapes and the respective natural frequencies;
2. optimizing a parametrized analytical or numerical structural model by calculating the predicted vibrational strain mode shapes and aligning them with the estimated strain mode shapes derived from the vibrational response data;
3. determining the relationship between the axial force and the natural frequency from the optimized structural model thereby estimating the acting axial force and the proximity to the buckling load.

12. The method according to claim 11, wherein said at least a physical quantity additionally comprises an array of temperatures measured by said at least a specific fibre optic interrogator unit and wherein said specialised algorithm is configured to additionally estimate a temperature distribution and estimate the acting axial force and the proximity to buckling failure additionally considering said estimated temperature distribution.

13. The system according to claim 11 or 12, wherein said at least one structural element comprises tunnel ceilings, said at least one fibre optic cable is installed within a tunnel ceilings' ventilation system, said at least one fibre optic cable being arranged in a serpentine pattern along alternating lateral sections of said the plurality of tunnel ceiling elements axis with parallel sections positioned to span at least in part each element of said plurality of tunnel ceiling elements.

14. The system according to claim 11 to 13, wherein said at least a physical quantity additionally comprises an array of strains measured by said at least a specific interrogator unit along said at least one fibre optic cable, and said specialized algorithm is additionally configured to validate changes in axial force with said array of strains.
